(19) Europäisches Patentamt

European Patent Office

Office européen des brevets

(11) **EP 1 172 406 B1**

(12) **EUROPEAN PATENT SPECIFICATION**

(45) Date of publication and mention
of the grant of the patent:
**28.09.2005 Bulletin 2005/39**

(51) Int Cl.⁷: **C08K 13/04**, C08L 21/00,
B60C 1/00

(21) Application number: **01306101.5**

(22) Date of filing: **16.07.2001**

(54) **Rubber composition for tyre tread**

Kautschukzusammensetzung für Reifenlauffläche

Composition de caoutchouc pour bande de roulement de pneu

(84) Designated Contracting States:
**DK FI SE**

(30) Priority: **14.07.2000 JP 2000214225**
**01.08.2000 JP 2000233469**

(43) Date of publication of application:
**16.01.2002 Bulletin 2002/03**

(73) Proprietor: **Sumitomo Rubber Industries Ltd.**
**Hyogo-ken (JP)**

(72) Inventors:
• **Tahara, Narihiro, c/o Sumitomo Rubber Ind. Ltd.**
**Kobe-shi, Hyogo-ken (JP)**
• **Uchida, Mamoru,**
**c/o Sumitomo Rubber Industries Ltd**
**Kobe-shi, Hyogo-ken (JP)**

(74) Representative:
**Manitz, Finsterwald & Partner GbR**
**Postfach 31 02 20**
**80102 München (DE)**

(56) References cited:
**EP-A- 0 945 482      EP-A- 1 006 007**
**EP-A- 1 176 167      US-A- 4 100 122**

• **LEWIS RICHARD J.: 'Hawley's Condensed**
**Chemical Dictionary, Twelfth Edition', VAN**
**NOSTRAND REINHOLD COMPANY, NEW YORK**

**Description**

The present invention relates to a tyre tread having a rubber composition, and particularly relates to a tyre tread having improved performance on snow and ice covered roads without decreasing in abrasion resistance.

A number of patents disclose that mixing short fibres (synthetic fibres, natural fibres, glass fibres, carbon fibres and the like) with a rubber improves the performance on snow and ice covered roads and abrasion resistance. Among these short fibres, inorganic fibres, for example glass fibres can improve performance. This is due to glass fibres being harder than ice and so they can scratch the ice. On the contrary, organic fibres (pulp, polyethylene, polyester, nylon and the like) are softer than ice and are not expected to scratch ice.

However, inorganic fibres are hard materials, and so these tend to lead the rubber composition to be hard in proportion to the amount thereof.

Generally, the hardness is adjusted by using liquid components such as petroleum softeners (aromatic oil, naphthene oil, paraffin oil, and the like) and low temperature plasticisers (dioctyl phthalate (DOP), dibutyl phthalate (DBP) and the like.

An increased amount of such liquid components is expected to decrease dispersibility of reinforcing agents (carbon black, silica and the like). The decreased dispersibility of reinforcing agents does not provide the rubber properties as planned, and provides decreased performance on ice road and decreased abrasion resistance.

For example, it is know that a spiked tyre is increased in performance on snow and ice covered roads and abrasion resistance by using a rubber composition for a spike pin obtained by mixing polyamide short fibres or aramide short fibres with rubber (e.g. Japanese unexamined patent publication No. 109618/1997). However, such a tyre has a problem in damaging the road surface. Further, organic fibres require a step to cut long fibres into short fibres. Furthermore, organic fibres have a large number of problems in the work environment or the like because of their low specific gravity and tendency to easily splash, and a problem of insufficient dispersion because of difficulty in dispersing them in the mixing step.

It is known that a tyre showing a high friction force on snow and ice covered roads, low damage on a road surface, and good tyre performance can be produced from a rubber composition obtained by mixing cured powders of a hardening resin with a rubber (Japanese unexamined patent publication No. 278941/1997), that a studless tyre having an excellent grip performance on ice covered roads can be produced from a tread rubber composition obtained by mixing a silicone polymer with a rubber (Japanese unexamined patent publication No. 241427/1997), the a pneumatic tyre having an excellent performance on snow and ice covered roads and good wet skid characteristics can be obtained by forming a foam rubber layer of a rubber composition comprising silica, carbon black or the like (Japanese unexamined patent publication No. 258469/1995).

However, the tyre of a rubber composition obtained by mixing cured powders of a hardening resin has an insufficient performance on snow and ice covered roads and a decreased abrasion resistance because the powders fall easily from the rubber composition. A tyre having a tread rubber composition comprising a silicone polymer also has a lower performance on snow and ice covered roads than that comprising glass fibres.

A tyre with a foam rubber layer of a rubber composition comprising silica, carbon black or the like has a problem of increasing in rubber hardness and decreasing in performance on snow and ice covered roads with the passage of time when ultrafine powders of reinforcing agents (carbon black, or silica) are used for improving the increased abrasion resistance.

The object of the present invention is to provide a tyre tread having a rubber composition that has good dispersibility of reinforcing agents without increased rubber hardness, can improve the performance of tyres on snow and ice covered roads and has good abrasion resistance.

Another object of the present invention is to provide a tyre tread having a rubber composition that can improve the performance on snow and ice covered roads and which is good in abrasion resistance, and which is inhibited from increasing rubber hardness with the passage of time.

The inventors have studied to improve the prior arts having the problems shown above, and found that a studless tyre of a rubber composition comprising inorganic fibres having a high specific gravity and cut by mechanical shearing in a mixing step and at least one of carbon black, silica and the like can be improved by inhibiting the hardness from increasing following the use of inorganic fibres, carbon black, silica or the like by using petroleum softeners (aromatic oil, naphthene oil, paraffin oil and the like) or low temperature plasticisers (DOP, DBP or the like).

However, petroleum softeners and low temperature plasticisers are dissipated by volatilisation or the like and lead the rubber hardness to increase. Increase rubber hardness is fatal to the performance on snow and ice covered roads. Adjusting the hardness by the vulcanisation system using sulfur and a vulcanisation accelerator can inhibit the hardness from increasing with the passage of time, but decreases the abrasion resistance.

The inventors have further studied and found that a tire tread having a rubber composition obtained by mixing glass fibres and reinforcing agents with a diene rubber can be improved in performance on snow and ice covered roads and in abrasion resistance without increasing the hardness by mixing a specific kind of inorganic powders.

The present invention relates to a tyre tread having a rubber composition as defined in claim 1.

The rubber composition of the tyre tread of the present invention can be obtained by mixing (a) a diene rubber, (b) glass fibres to increase the performance on snow and ice covered roads and the abrasion resistance, (c) carbon black and/or silica to increase the abrasion resistance, and the inorganic powders to inhibit the rubber hardness from increasing.

Examples of the diene rubber used in the present invention include natural rubber, and synthetic diene rubber such as a styrene-butadiene rubber (SBR), butadiene rubber (BR), isoprene rubber (IR), ethylene-propylene-diene rubber, chloroprene rubber, acrylonitrile-butadiene rubber, isoprene-isobutylene rubber (IIR), or halogenated butyl rubber (X-IIR). A diene rubber having a glass transition temperature (Tg) of at most -30°C is preferable from the viewpoint of the properties at low temperature. These can be used singly or in combination of two or more.

In the present invention, glass fibres are used selectively from a large number of inorganic fibres, because they are inexpensive, can increase the performance on snow and ice covered roads and improve the abrasion resistance of the tyre, and can decrease the cost by improving the process. Glass fibres focus in an even length to stabilise the performance of the rubber composition preferably.

The process can be improved to decrease the cost, because glass fibres are cut easily by mechanical shearing in a mixing step and enable the cutting step for long fibres to be omitted, and because short fibres have a low specific gravity and are inhibited from splashing in the process. Organic fibres can not be cut by shearing force in a mixing step and require a cutting step, and splash easily and require a countermeasure.

The glass fibres have a diameter of preferably at most 100 $\mu$m, more preferably l to 100 $\mu$m, further preferably 3 to 50 $\mu$m, and most preferably 5 to 50 $\mu$m. Glass fibres having a diameter of smaller than l $\mu$m do not dig and scratch an iced road surface. On the other hand, glass fibres having a diameter of larger than 100 $\mu$m decrease the adhesion component of friction and the hysteresis component of friction of the rubber composition and tend to provide an insufficient adhesion component of friction or an insufficient hysteresis component of friction.

The glass fibres have a length of preferably 0.1 to 20 mm, more preferable 0.1 to 10 mm, further preferably 0.1 to 5 mm, much more preferably 0.1 to 3 mm, and most preferably 0.2 to 3 mm. Glass fibres shorter than 0.1 mm tend to drip from the tread surface during running. On the other hand, glass fibres longer than 5 mm tend to make processing the rubber composition difficult.

Glass fibres having an aspect ratio in the range of preferably 2 to 4000, and more preferably 4 to 2000.

The glass fibres have a Mohs hardness ordinary in the range of 6 to 7, preferably 6.5.

The glass fibres are used in an amount of preferably 2 to 30 parts by weight, more preferably 2 to 28 parts by weight, and most preferably 2 to 20 parts by weight based on 100 parts by weight of the diene rubber. Glass fibres used in an amount of less than 2 parts by weight provides insufficient fibres protruding from the tread surface, dig and scratch insufficiently, and so do not sufficiently improve the performance on snow and ice covered roads or the abrasion resistance. More than 30 parts by weight of glass fibres increases block stiffness of the tread rubber excessively and tends to inhibit the tread rubber surface from following the road surface. Glass fibres are hard materials, lead the rubber composition to be hard proportional to the amount thereof, and tend to improve the performance on snow and ice covered roads insufficiently because of the excessively high hardness of the tyre.

In the present invention, glass fibres orientated vertically to the tyre tread surface can improve the performance on snow and ice covered roads and the abrasion resistance. Glass fibres can be oriented vertically to the tyre tread surface by rolling a rubber composition comprising the glass fibres with a calendar roll and by folding the resultant sheet.

The rubber composition of the present invention contains as reinforcing agent carbon black and/or silica.

In the present invention, carbon black used for a rubber composition for a tyre can be used without limitation. The carbon black used preferably has a nitrogen absorption specific surface area (N$_2$SA) of at least 83 m$^2$/g and a dibutyl phthalate absorption (DBP) of at least 102 ml/100g. Examples of carbon black include SAF, ISAF-HM, ISAF-LM, ISAF-HS, HAF.

In the present invention, silica used for a rubber composition for a tyre can be used without limitation. The silica used preferably has a nitrogen absorption specific surface area (N$_2$SA) of at least 150 m$^2$/g. Examples of silica include silica from a dry process (anhydrous silicate), and silica from a wet process (hydrous silicate). Silica from a wet process is preferably used. Examples of silica from a wet process include Nipsil AQ (trade name) available from Nippon Silica Industrial Co Ltd.

Carbon black and silica can be used singly or in combination. Silica is preferable blended and used from the viewpoints of the performance on snow and ice covered roads and the wet grip performance.

Carbon black singly used as the reinforcing agent is used in an amount of preferably 5 to 70 parts by weight, and more preferably 5 to 60 parts by weight based on 100 parts by weight of the diene rubber. Less than 5 parts by weight of carbon black lead the rubber composition to a low hardness and a low abrasion resistance. More than 70 parts by weight of carbon black leads the rubber composition to an increased hardness and a decreased performance on snow and ice covered roads.

Silica used singly as the reinforcing agent is used in an amount preferably 10 to 80 parts by weight, and more preferably 15 to 60 parts by weight based on 100 parts by weight of the diene rubber. Less than 10 parts by weight of silica tend to lead the rubber composition to an insufficient wet skid characteristics. More than 80 parts by weight of silica tend to lead the rubber composition to increase in hardness and decrease in performance on snow and ice covered roads.

Carbon black and silica used in combination are used in a total amount of preferably 5 to 80 parts by weight, and more preferably 5 to 60 parts by weight based on 100 parts by weight of the diene rubber.

Glass fibres and the reinforcing agent carbon black and/or silica are used in a total amount of preferably 7 to 110 parts by weight, and more preferably 7 to 80 parts by weight based on 100 parts by weight of the diene rubber. Glass fibres are used in a ratio of preferably 2 to 50% by weight, more preferably 3 to 40% by weight based on the total amount of the glass fibres and the reinforcing agent from the view point of the balance between the performance on snow and ice covered roads and the abrasion resistance.

In the present invention, based on the hardness of the glass fibres, inorganic powders softer than the glass fibres are used to maintain the rubber hardness and dispersibility of the reinforcing agent. Inorganic powders softer than the glass fibres are used to inhibit the rubber hardness from increasing. Inorganic powders to be used have a Mohs hardness of less than 6.5, preferable not more than 4.5, and more preferably not more than 3, and ordinarily not less than 2.

The inorganic powders include clay (aluminium silicate, the composition formula: $SiO_2/Al_2O_3/Fe_2/O_3/TiO_2$, Mohs hardness: 2 to 2.5), aluminium hydroxide (the composition formula: $Al(OH)_3$, Mohs hardness: 2 to 3), magnesium hydroxide (the composition formula: $Mg(OH)_2$), calcium silicate (the composition formula: $CaSiO_3$, Mohs hardness: 4.5), mica (the composition formula: $A_{1-x}B_{2-3}[(OH,F)_2X_4O_{10}]$; A = K, Na, Ca, Ba, $NH_4$, $H_3O$, (void); B = A1, Fe(III), Mg, Fe(II), Mn(II), Li, Zn, V(III), Cr(III), Ti; X = Si, A1, Be, Fe(III); x = 0 to 0.5, Mohs hardness: 2.5 to 3) and the like.

Mohs hardness used herein is one of mechanical properties of materials and also an evaluation method for minerals used traditionally and generally. In this method, material cut by scratching with the following ten kinds of minerals one by one is estimated to have lower hardness than the mineral. From the mineral of the lowest hardness, 1: talc, 2: gypsum, 3: calcite, 4: fluorite, 5: apatite, 6: orthoclase, 7: rock crystal, 8: topaz, 9: corundum, and 10: diamond are used in series.

Inorganic powders having an average particle size of less than 25 μm, and preferably not more than 20 μm are used. Inorganic powders having too large average particle size tend to decrease the abrasion resistance. Inorganic powders having a greater average particle size than the reinforcing agent can improve dispersibility of the reinforcing agent. The inorganic powders have an average particle size of preferably not less than 0.03 μm, and more preferably not less than 0.1 μm.

Inorganic powders are used in an amount of 1 to 15 parts by weight, and preferably 2 to 12 parts by weight based on 100 parts by weight of the diene rubber. Less than 1 parts by weight of inorganic powders cannot improve dispersibility of the reinforcing agent and cannot provide a desirable property. More than 15 parts by weight of inorganic powders tend to decrease the durability.

The process for using inorganic powders is simple and easy and merely comprises adding the inorganic powders to a diene rubber.

Examples of a softener includes the generally used softeners without limitation, for example, a petroleum softener, such as aromatic oil, naphthene oil or paraffin oil, a low temperature plasticiser, such as DOP or DBP. Paraffin oil is preferably used from the viewpoint of the properties at low temperature important for the performance on snow and ice covered roads.

Softener is used in an amount of preferably 0 to 50 parts by weight, and more preferably at most 40 parts by weight based on the diene rubber. A softener is used preferably in an amount of at least 1 parts by weight from the viewpoint of achieving a sufficient effect. More than 50 parts by weight of a softener tend to increase changes with the passage of time.

The composition of the present invention preferably comprises a silane-coupling agent. A silane-coupling agent increases the rubber strength and the abrasion resistance when used with silica.

Examples of silane-coupling agent include bis(3-triethoxysililpropyl) tetrasulfide, bis(2-triethoxysililethyl) tetrasulfide,

bis(3-trimethoxysililpropyl) tetrasulfide,

bis(2-trimethoxysililethyl) tetrasulfide,

3-mercaptopropyltrimethoxysilane,

3-mercaptopropyltriethoxysilane, 2-mercaptoethyltrimethoxysilane,

2-mercaptoethyltriethoxysilane, 3-nitropropyltrimethoxysilane,

3-nitropropyltriethoxysilane, 3-chloropropyltrimethoxysilane,

3-chloropropyltriethoxysilane, 2-chloroethyltrimethoxysilane,

2-chloroethyltriethoxysilane,

3-trimethoxysililpropyl-N,N-dimethylthiocarbamoyltetrasulfide,

3-triethoxysililpropyl-N,N-dimethylthiocarbamoyltetrasulfide,
2-triethoxysililethyl-N,N-dimethylthiocarbamoyltetrasulfide,
3-trimethoxysililpropylbenzothiazoltetrasulfide,
3-triethoxysililpropylbenzothiazoltetrasulfide,
3-triethoxysililpropylmethacrylatemonosulfide,
3-trimethoxysililpropylmethacrylatemonosulfide,
bis (3-diethoxymethylsililpropyl)tetrasulfide,
3-mercaptopropyldimethoxymethylsilane,
3-nitropropyldimethoxymethylsilane,
3-chloropropyldimethoxymethylsilane,
dimethoxymethylsililpropyl-N,N-dimethylcarbamoyltetrasulfide,
dimethoxymethylsililpropylbenzothiazoltetrasulfide,
Bis(3-triethoxysililpropyl)tetrasulfide,
3-trimethoxysililpropylbenzothiazoltetrasulfide and the like can used preferably.

A silane-coupling agent can be used in an amount of preferably 3 to 20% by weight, and more preferably 5 to 15% by weight based on the silica. Less than 3% by weight of a silane-coupling agent achieves a low coupling effect to increase the rubber strength and the abrasion resistance insufficiently. More than 20% by weight of a silane-coupling agent does not increase the rubber strength corresponding with the increased amount thereof and is not preferable from the viewpoint of the cost.

The rubber composition of the tyre tread of the present invention can comprise required components and additives used generally in the rubber industry in the usual amount. Examples of the components and additives include, for instance, process oils (paraffin-base process oil, naphthene-base process oil, aromatic-base process oil and the like), vulcanisation agents (sulfur, sulfur chloride compounds, organic sulfur compounds and the like), vulcanisation accelerators (guanidine-base, aldehyde/amine base, aldehyde/ammonia-base, thiazole-base, sulfenamide-base, thiourea-base, thiuram-base, dithiocarbamate-base, Zandate-base compound and the like), crosslinking agents (radical generators such as organic peroxide compounds, azo compounds, oxime compounds, nitroso compounds, polyamine compounds and the like), antioxidants (amine derivatives such as diphenylamine-base, p-phenylenediamine-base, quinoline derivatives, hydroquinoline derivatives, monophenols, diphenols, thiobisphenols, hinderedphenols, phosphite esters and the like), waxes, stearic acid, zinc oxide, softeners, fillers, plasticisers, magnesium carbonate, calcium carbonate, whisker and the like.

The rubber composition of the tyre tread of the present invention can be produced by mixing the above-mentioned components to each other using the usual procedures and conditions in a mixer such as a Banbury mixer. The mixing is preferably conducted at a temperature of 120 to 180°C. A tyre can be obtained by forming and vulcanising the above-mentioned rubber composition for a tyre tread.

## EXAMPLES

The present invention is explained in more details based on the following Examples, but the present invention is not limited thereto.

Raw materials and evaluation methods used in Examples and Comparative Examples are shown below.

Raw Materials

Natural rubber (NR): generally used RSS #3 grade.
Carbon black A: available from Showa Cabot K.K., $N_2SA$ of $79 \times 10^3 m^2/kg$,
DBP Oil Absorption of $102 \times 10^{-5} m^3/kg$, Average Particle Size of 0.03 $\mu$m.
Carbon black B: N330 available from Tokai Carbon Co Ltd, $N_2SA$ of $83 \times 10^3 m^2/kg$, DBP Oil Absorption of $102 \times 10^{-5} m^3/kg$.
Glass fibres: Micro-Glass Chopped Strand (trade name), available from Nippon Glass Fiber K.K.. Diameter of 10 $\mu$m, Length of 0.4 mm, Aspect Ratio of 40.
HIGILITE H43: available from Shows Denko K.K., Average Particle Size of 0.6 $\mu$m.
Suprex: available from J M Huber, Average Particle Size of 0.3 $\mu$m.
HIGILITE H21: available from Showa Denko K.K., Average Particle Size of 25 $\mu$m.
Softener: Rubflex 26 available from Shell Chemical Co Ltd.
Sulfur: available from Tsurumi Chemical K.K.
Vulcanisation accelerator: Nocceller CZ available from Ouchishinko Chemical Industries Co Ltd.

Evaluation Method

(1) Rubber Hardness

Rubber hardness was measured according to JIS A method.

(2) Dispersibility of Carbon Black

Dispersibility of carbon black (CB) was measured according to ASTM D2663B method.

A test piece 3 mm x about 8 mm, and about 2 mm of thickness) of a vulcanised rubber composition of a tire tread was sampled, put on a sample table for a microtome, and cooled and liquid nitrogen or dry ice for hardening. A flake about 2 $\mu$m was made by using the microtome equipped with a glass knife and immersed in naphtha for swelling. The flake after swelling was spread on a slide prepared for a microscope equipped with an ocular lens having 10000 squares in total (one hundred squares each in length and width) of a lattice scale of 10 $\mu$m x 10 $\mu$m, the total magnifying power was set up to 75 to 100 times, and the number of dispersible CB clusters of not ½ time smaller than the square was counted. The dispersion degree was calculated from the following equation. Although 100% is preferable in the dispersion degree, CB was evaluated GOOD in dispersibility if not less than 95% and BAD if less than 95%.

$$\text{Dispersion Degree (\%)} = 100 - S \times U \div L$$

S: Total number of squares occupied with dispersible clusters of CB.
U: Swelling factor of sample for measurement (Area after swelling $\div$ Area before swelling).
L: % by volume of CB in a compound (vulcanised rubber).

$$L = (\text{parts by volume of CB}) \div \{(\text{parts by volume of CB}) + 2 \times (\text{parts}$$

$$\text{by volume of rubber}) + 2 \times (\text{parts by volume of oil (naphthal)})\} \times 100$$

(3) Performance on Ice Road

Tyres having tyre size/pattern of 185/70R14 HS3 were produced experimentally and measured for a stopping distance at the initial speed of 20 km/h on an ice covered road. Performance on the ice covered road was evaluated with an index calculated from the following equation based on Comparative Example I as reference. A higher index value indicates a better performance.

$$(\text{Stopping Distance in Comp Ex 1}) \div (\text{Stopping Distance}) \times 100$$

(4) Performance on Snow Covered Road

Controllability in driving (feeling in braking and driving, and feeling in cornering) on snow road was evaluated based on Comparative Example 1 as 6. A higher value indicates a better performance on snow road.

(5) Abrasion Resistance

Tyres having a tyre size and pattern of 185/70R14 and HS3 were produced experimentally and abrasion tested on a Toyota Camry car (trade name). After running 5000 km, the tread pattern depth was measured, and the running distance in which the tread pattern depth was reduced by 1 mm was calculated and indexed according to the following equation based on Comparative Example 1 as 100. A higher index value indicates a better abrasion resistance.

$$(\text{Running distance reducing 1 mm}) \div (\text{Running distance reducing 1 mm}$$

$$\text{in Comp Ex 1} \times 100$$

Examples 1 to 3 and Comparative Examples 1 to 5

A tyre tread comprising glass fibres oriented vertically to the tyre tread surface was produced by folding repeatedly a sheet of 1 mm thickness and 1.5 m width obtained by rolling the rubber composition shown in Table 1.

Vulcanisation was carried out at 150°C for 50 hours. The obtained tyre was evaluated as shown above. The results are shown in Table 1.

Table 1

| Raw materials (parts by weight) | Ex. 1 | Ex. 2 | Ex. 3 | Comp. Ex. 1 | Comp. Ex. 2 | Comp. Ex. 3 | Comp. Ex. 4 | Comp. Ex. 5 |
|---|---|---|---|---|---|---|---|---|
| NR | 100 | 100 | 100 | 100 | 100 | 100 | 100 | 100 |
| Carbon Black A | 60 | 55 | 55 | 60 | 60 | 60 | 60 | 60 |
| Glass fibres | 10 | 10 | 10 | - | 10 | 10 | 10 | 10 |
| HIGILITE H43 | 5 | 5 | - | - | - | - | 0.5 | 20 |
| Suprex | - | - | 5 | - | - | - | - | - |
| HIGILITE H21 | - | - | - | - | - | 5 | - | - |
| Softener | 28 | 28 | 28 | 25 | 28 | 28 | 28 | 28 |
| Sulfur | 1.2 | 1.2 | 1.2 | 1.2 | 1.2 | 1.2 | 1.2 | 1.2 |
| Vulcanisation accelerator | 1.5 | 1.5 | 1.5 | 1.5 | 1.5 | 1.5 | 1.5 | 1.5 |
| Mohs hardness of glass fibres | 6.5 | 6.5 | 6.5 | 6.5 | 6.5 | 6.5 | 6.5 | 6.5 |
| Average particle size of carbon black | 0.03 μm | 0.03 μm | 0.03 μm | 0.03 μm | 0.03 μm | 0.03 μm | 0.03 μm | 0.03 μm |
| Mohs hardness of inorganic powders | 3 | 3 | 2 to 2.5 | - | - | 3 | 3 | 3 |
| Average particle size | 0.6 μm | 0.6 μm | 0.3 μm | - | - | 25 μm | 0.6 μm | 0.6 μm |
| Rubber hardness | 56 | 55 | 55 | 55 | 55 | 56 | 55 | 59 |
| Degree of dispersion of carbon black | GOOD 97% | GOOD 96% | GOOD 96% | GOOD 97% | BAD 90% | GOOD 97% | BAD 90% | GOOD 98% |
| Performance on ice | 105 | 108 | 106 | 100 | 105 | 105 | 105 | 100 |
| Performance on snow | 6 | 7 | 7 | 6 | 7 | 6 | 7 | 6 |
| Abrasion resistance | GOOD 105 | GOOD 102 | GOOD 103 | GOOD 100 | BAD 97 | BAD 96 | BAD 97 | BAD 95 |

In Comparative Example 2, the hardness was adjusted with a softener, and dispersability of carbon black and the abrasion resistance were decreased.

In Example 1, mixing inorganic powders softer than glass fibres and larger than carbon black improved dispersibility of carbon black and provided the sufficient abrasion resistance remaining the performance on snow and ice covered roads, although slightly increased the hardness. In Example 2, replacing a part of the carbon black with an equal amount of inorganic powders improved the dispersibility of carbon black and provided sufficient performance on a snow and ice covered road, the sufficient abrasion resistance and retained the hardness. In Example 3, inorganic powders of a slightly small Mohs hardness and a small average particle size provided the sufficient performance on a snow and ice covered road and sufficient abrasion resistance.

In Comparative Example 3, inorganic powders having a diameter of not less than 25 μm reinforced the rubber insufficiently and decreased the abrasion resistance, although increased dispersibility of carbon black. In Comparative Example 4, a small amount of inorganic powders did not increase dispersibility of carbon black. In Comparative Example 5, a large amount of inorganic powders reinforced the rubber insufficiently and decreased the abrasion resistance although increased dispersibility of carbon black.

The inorganic powders have an average particle size of not more than 25 μm and are used in an amount of 1 to 15 parts by weight.

## Claims

1. A tyre tread having a rubber composition, **characterized in that** the rubber composition comprises (a) a dien rubber, (b) glass fibres, (c) carbon black and/or silica, and 1 to 15 parts by weight of (d) inorganic powders being softer than the glass fibres and having a Mohs hardness of less than 6.5 and an average particle size of less than 25 μm based on 100 parts by weight of the dien rubber, wherein said (d) inorganic powders are at least one kind of inorganic powders selected from the group consisting of clay, aluminium hydroxide, magnesium hydroxide, calcium silicate and mica.

2. A tyre tread according to claim 1, **characterized in that** the inorganic powders have an average particle size of not less than 0.03 μm.

3. A tyre tread according to claim 1, **characterized in that** a softener is included.

## Patentansprüche

1. Reifenlauffläche mit einer Kautschukzusammensetzung, **dadurch gekennzeichnet, daß** die Kautschukzusammensetzung (a) einen Dienkautschuk, (b) Glasfasern, (c) Ruß und/oder Silica und, bezogen auf 100 Gewichtsteile Dienkautschuk, 1 bis 15 Gewichtsteile von (d) anorganischen Pulvern aufweist, die weicher als die Glasfasern sind und eine Mohs-Härte von weniger als 6,5 und eine durchschnittliche Teilchengröße von weniger als 25 μm haben, wobei die (d) anorganischen Pulver wenigstens eine Art von anorganischen Pulvern sind, die aus der Gruppe ausgewählt sind, die aus Ton, Aluminiumhydroxid, Magnesiumhydroxid, Calciumsilicat und Glimmer besteht.

2. Reifenlauffläche nach Anspruch 1, **dadurch gekennzeichnet, daß** die anorganischen Pulver eine durchschnittliche Teilchengröße von weniger als 0,03 μm haben.

3. Reifenlauffläche nach Anspruch 1, **dadurch gekennzeichnet, daß** ein Weichmacher enthalten ist.

## Revendications

1. Bande de roulement de bandage pneumatique, comprenant une composition de caoutchouc, **caractérisée en ce que** la composition de caoutchouc comprend (a) un caoutchouc diénique, (b) des fibres de verre, (c) du noir de carbone et/ou de la silice, et 1 à 15 parties en poids (d) de poudres inorganiques ayant une souplesse supérieure à celle des fibres de verre et ayant une dureté Mohs inférieure à 6,5 et un diamètre moyen de particules inférieur à 25 μm sur la base de 100 parties en poids du caoutchouc diénique, -dans laquelle lesdites poudres inorganiques (d) consistent en au moins un type de poudres inorganiques choisi dans le groupe consistant en une argile, l'hydroxyde d'aluminium, l'hydroxyde de magnésium, le silicate de calcium et le mica.

2. Bande de roulement de bandage pneumatique suivant la revendication 1, **caractérisée en ce que** les poudres inorganiques ont un diamètre moyen de particules non inférieur à 0,03 μm.

**3.** Bande de roulement de bandage pneumatique suivant la revendication 1, **caractérisée en ce qu'**un agent ramollissant est incorporé.